(19)

Europäisches
Patentamt
European
Patent Office
Office européen
des brevets

(11) **EP 2 530 442 A1**

(12) **EUROPEAN PATENT APPLICATION**

(43) Date of publication:
**05.12.2012 Bulletin 2012/49**

(21) Application number: **11168077.3**

(22) Date of filing: **30.05.2011**

(51) Int Cl.:
*G01J 5/02* (2006.01)      *G01J 5/08* (2006.01)
*G01J 5/00* (2006.01)      *G01J 5/10* (2006.01)
*G01J 5/20* (2006.01)

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(71) Applicant: **Axis AB<br>223 69 Lund (SE)** | (72) Inventor: **Lundberg, Stefan<br>SE-224 56 LUND (SE)**<br><br>(74) Representative: **Valea AB<br>Anna Lindhs Plats 4<br>211 19 Malmö (SE)**<br><br>Remarks:<br>Amended claims in accordance with Rule 137(2) EPC. |

(54) **Methods and apparatus for thermographic measurements.**

(57)      Methods and apparatus, including cameras and computer program products, implementing and using techniques for determining a temperature of a distant object in several temperature measurement points. A thermal image sensor (106) measures thermal radiation from a distant object in several thermal measurement points on the object. A distance determination device includes an image sensor (104) and calculates a distance to the object in several distance measurement points. A thermal image indicating an amount of thermal radiation from each thermal measurement point on the object is captured by the thermal image sensor. Reflected light from the object is captured by the image sensor. Several distances are calculated using the captured light. Each distance indicates a distance from the image sensor to a distance measurement point on the object. The data from the thermal image and the calculated distances are combined to determine a temperature in several temperature measurement points on the object.

Fig. 1

## Description

BACKGROUND

The various embodiments of the present invention relate to thermographic measurements. Thermographic measurements are used in a wide range of applications. Some examples of thermography applications include medical imaging, thermology, night vision, process control, surveillance, chemical imaging, measuring energy efficiency for buildings, and so on.

Typically, thermographic measurements are accomplished using so-called thermal imaging cameras, which can detect radiation in the infrared range of the electromagnetic spectrum and produce images of that radiation. Such images are conventionally referred to as thermograms. As the amount of radiation emitted by an object increases with temperature, thermal cameras are able to see variations in temperature of objects, and can thus detect the surrounding environment with or without visible illumination. This renders thermal imaging cameras very attractive in, for example, military or surveillance applications. However, thermal cameras have limited accuracy when it comes to measuring exact temperatures of objects at large distances, which may pose limits on the situations in which they can be successfully used. Thus, it is desirable to find a way to more accurately measure temperatures of objects at large distances more accurately.

SUMMARY

Methods and apparatus, including cameras and computer program products are provided for determining a temperature of a distant object in several temperature measurement points. A thermal image sensor is provided. The thermal image sensor can measure thermal radiation from a distant object in several thermal measurement points on the object. A distance determination device is provided. The distance determination device includes an image sensor that can calculate a distance to the distant object in several distance measurement points on the distant object. A thermal image is captured by the thermal image sensor. The thermal image indicates an amount of thermal radiation from each of the thermal measurement points on the distant object. The image sensor captures reflected light from the distant object. Several distances are calculated using the captured reflected light by the image sensor. Each distance indicates a distance from the image sensor to a distinct distance measurement point on the distant object. The data from the thermal image and the calculated distances are combined to determine a temperature in several temperature measurement points on the distant object.

Various embodiments can include one or more of the following features. The thermal image and the reflected light can be captured substantially simultaneously. The distant object can be a moving object and the capturing, calculating and combining steps can be continuously repeated to record temperature variations in each of the temperature measurement points on the distant object over time. The thermal image sensor and the image sensor can be provided in a common housing, which further includes a common optical system through which electromagnetic radiation is operable to pass on its way from the distant object to the thermal image sensor and the image sensor, respectively. The common housing can be a handheld unit, a stationary camera housing or a pan-tilt-zoom camera housing.

The optical system can include a beam splitter, and the electromagnetic radiation from the distant object can be divided by the beam splitter into a first optical path leading to the thermal image sensor, and into a second optical path leading to the image sensor. The optical system can include one or more optical band pass filters that can pass different wavelengths of electromagnetic radiation to the thermal image sensor and to the image sensor, respectively. The thermal image sensor can have a same effective resolution as the image sensor, thereby creating a one-to-one correspondence between pixels in an image captured by the thermal image sensor and pixels in an image captured by the image sensor. The same effective resolution can be ensured by mathematically mapping the pixels in the thermal image sensor to the pixels in the image sensor.

The thermal image sensor and the image sensor can be calibrated before capturing electromagnetic radiation from the distant object. A user input can be received, which specifies a surface material for the distant object, and an emissivity for the specified surface material can be taken into account when processing the thermal image and the distances to determining the corrected temperature. Image analysis can be performed on the image captured by the image sensor to determine the type of distant object, and based on the determined type of distant object, an appropriate surface material can be automatically selected for the distant object; and an emissivity for the specified surface material can be taken into account when processing the thermal image and the distances to determining the corrected temperature.

The distance determination device can illuminate the distant object with modulated light and measure a travel time for the light reflected from the distant object at discrete positions in the image sensor. The distance determination device can be a time of flight image sensor. The distance determination device can illuminate the distant object with coherent light through a diffuser arranged to project a speckle pattern onto the distant object and measure variations in the speckle pattern on the distant object to calculate the distances to the plurality of distance measurement points on the distant object.

Various embodiments of the invention can realize one or more of the following advantages. The temperature of distant objects can be measured more accurately compared to conventional techniques.

The details of one or more embodiments of the invention are set forth in the accompanying drawings and the description below. Other features and advantages of the invention will be apparent from the description and drawings, and from the claims.

BRIEF DESCRIPTION OF THE DRAWINGS

FIG. 1 shows a schematic view of a camera, in accordance with one embodiment.

FIG. 2 shows a schematic view of a camera measuring the temperature of three separate distant objects, in accordance with one embodiment.

FIG. 3A shows a schematic view of an image of a distant object and its temperature distribution, as captured by a conventional thermal camera.

FIG. 3B shows a schematic view of an image of the same distant object as in FIG. 3A and its temperature distribution, as captured by a camera in accordance with one embodiment.

FIG. 4 is a flowchart of a process for measuring the temperature of a distant object, in accordance with one embodiment.

Like reference symbols in the various drawings indicate like elements.

DETAILED DESCRIPTION

Overview

The various embodiments that are described herein provide methods and apparatus for temperature measurements of distant objects with improved accuracy compared to temperature measurements by conventional thermal imaging cameras. The enhanced accuracy of temperature measurements is achieved by combining a thermal imaging sensor, such as the ones used in thermal imaging cameras, with an image sensor used for distance measurements, for example, a time of flight type of sensor. Data from the images registered by the two sensors is then combined and processed, in some embodiments along with additional user-supplied data, to determine a temperature in several temperature measurement points on the distant object. In various embodiments, time series of images can also be captured in order to determine temperature variations in the temperature measurement points on the distant object over time. The image sensors and logic for processing the images can be contained in the same housing in various embodiments, and can thus be used in a variety of different cameras, such as handheld units, stationary units, PTZ (Pan Tilt Zoom) cameras, etc. Further features and details will be described below, by way of example. It should be realized, however, that this description is by no means exhaustive and that many variations that fall within the scope of the appended claims can be envisioned and implemented by those of ordinary skill in the art.

Furthermore, as will be appreciated by one skilled in the art, aspects of the present invention may be embodied as an apparatus, a system, a method, a computer program product, or various combinations thereof. Accordingly, certain aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's camera, partly on the user's camera, as a stand-alone software package, partly on the user's camera and partly on a remote device or entirely on the remote device or server. In the latter scenario, the remote device may be connected to the user's camera through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, which may be partly or entirely included in a camera, create means for implementing the functions/acts specified in the flowchart and/or block diagram block or blocks.

These computer program instructions may also be stored in a computer readable medium that can direct a computer, other programmable data processing apparatus, or other devices such as cameras to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Camera Architecture Overview

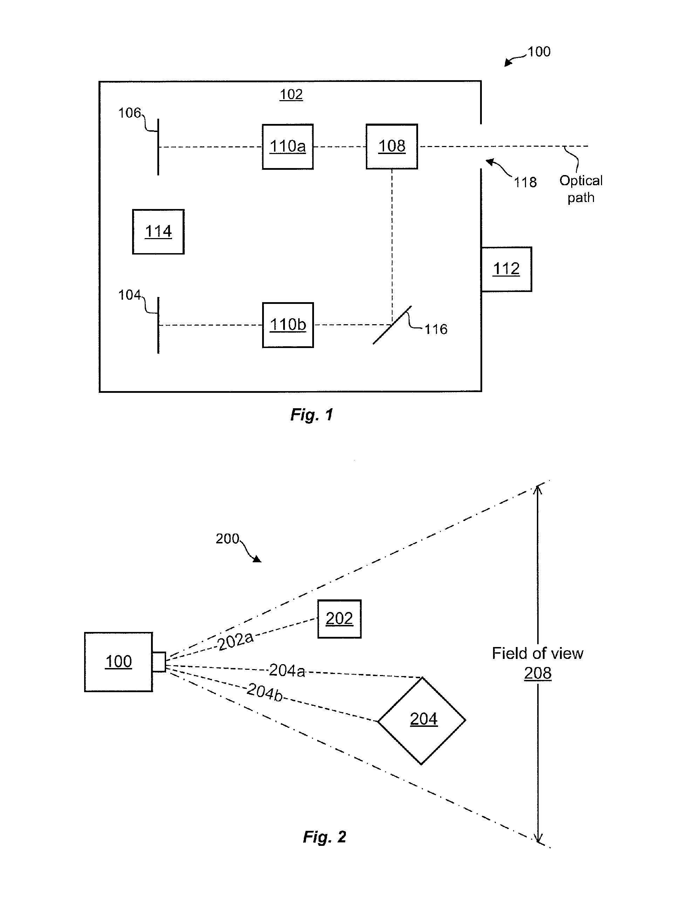

FIG. 1 shows a schematic view of a camera 100 that includes a housing 102, an image sensor 104 for distance measurements, a thermal image sensor 106, a beam splitter 108, two lens systems 110a, 110b, a light emitter 112, a processing module 114, and a mirror 116. It should be noted that for reasons of clarity the components illustrated in FIG. 1 merely constitute a few key components of the camera 100. As the skilled person realizes, the camera 100 further contains a wide range of additional components, such as a power supply, memory circuitry containing instructions for the operation of the camera 100, and various controllers that control and coordinate the actions between the different elements of the camera 100 etc. The lens systems 110a, 110b, the mirror 116 are also schematically illustrated and may each contain one or more optical components made of materials that are appropriate for the operations which will be described below. Each of the illustrated elements and their respective operations will now be described in further detail.

Housing

The camera housing 102 can be a conventional camera housing that is used for various types of cameras, depending on the usage area. For example, the camera 100 can be a handheld camera, a PTZ (Pan Tilt Zoom) camera, a stationary camera, etc. as can be envisioned by those of ordinary skill in the art.

Image sensor

In some embodiments, the image sensor 104 includes an array of light sensitive pixels. The number of pixels can vary, but is typically in the range of 50 by 50 pixels through 500 by 500 pixels, for example, a matrix of 200 by 200 pixels. It should however be noted that as new technologies become available, the matrices may be significantly larger than what is encompassed by the above range. In some embodiments, the light sensitive pixels can be arranged in a circular pattern instead of a matrix pattern. Typically, the image sensor 104 has a high sensitivity so that it can detect small intensities in the incoming light. Many types of image sensors can be used, such as conventional CCD (Charge Coupled Device) sensors or various types of APS (Active Pixel Sensor) sensors, such as CMOS (Complementary Metal Oxide Semiconductor) APS sensors, which are familiar to those of ordinary skill in the art. In some embodiments, specialized time of flight type of sensors, such as PIN diodes or APDs (Avalanche Photo Diodes) are advantageously used. In contrast to conventional image sensors, a TOF image sensor is capable of delivering not only an intensity image, but also a range map that contains a distance measurement at each pixel, obtained by measuring the time required by light to reach an object and return to the camera (i.e., the time-of-flight principle). Thus, in the embodiment shown in FIG. 1, the image sensor 104 works in conjunction with the light emitter 112 to measure the time it takes for light emitted from the light emitter 112, to travel to the distant object, and back to each pixel of the image sensor 104, as will be described in further detail below. The image sensor 104 is coupled to the processing module 114, which will be described in further detail below.

## Thermal image sensor

Turning now to the thermal image sensor 106, this can be a type of sensor that is found in conventional thermal imaging cameras, that is, a sensor that forms an image using infrared radiation rather than visible light. While visible light image sensors typically operate in the electromagnetic wavelength range of about approximately 450-750 nm, infrared light image sensors operate in wavelengths as long as approximately 14,000 nm. Just like for visible light image sensors, there is a wide range of thermal image sensors 106. One type of sensor includes a microbolometer image sensor, which has an array of sensor elements that each has a micro-resistor, which changes its resistance as it heats up. By focusing the infrared light onto the sensor elements and reading the changes in resistance of the elements, a thermal image can be calculated. The thermal image sensor 106 and the image sensor 104 may have the same or different resolutions depending on the sensor technologies used. At the present time, both sensors may have a resolution of approximately 320 by 200 pixels, but it is clear that these numbers will increase as technology improves in the future. The thermal image sensor 106 is also coupled to the processing module 114. It should be noted that while the image sensor 104 measures light reflected from an object, typically in the NIR (Near Infrared Range), the thermal image sensor 106 typically measures an amount of blackbody radiation emitted by the object, which typically increases as the temperature of the object increases in accordance with well-known mathematical formulas.

## Processing module

The processing module 114 receives the output signals from the image sensor 104 (i.e., a distance measured at each pixel) and the thermal image sensor 106 (i.e., an amount of heat radiation measured at each sensor element) and combines the data to determine a temperature at a number of points on a distant object imaged by the camera, in essence providing an image of a temperature distribution across the portion of the distant object that is visible to the camera 100. By having more exact knowledge of the distance to the object, the temperature can be determined more accurately than what would be possible with a conventional thermal camera.

It is also well known that different objects have different emissivity. Thus, the processing device may in some embodiments also be able to take this into account when determining the temperature of the object. For example, a user can be provided with a list of materials for which the emissivity is known, and select one of the materials. The emissivity of the selected material is then taken into account by the processing module 114 when determining the temperature of the object. In some embodiments, it is even possible to use image analysis techniques to estimate a material, and use a known emissivity value for the material. For example, by performing image analysis on a captured image, it may be deduced that the image shows a human face. Thus, it would be reasonable to assume that the emissivity to be used in the calculations would be the emissivity of skin, etc.

Typically, the temperature (T) of an object is related to the thermal radiation or irradiance ($j^*$) of the object through the Stefan-Boltzmann law, the constant of proportionality ($\sigma$) (also referred to as the Stefan-Boltzmann constant), and the emissivity ($\varepsilon$) of the object according to the following mathematical formula:

$$j^* = \varepsilon\,\sigma T^4$$

Thus, by knowing the temperature of the object and performing temperature readings at different known distances from the object, it is possible to determine a relationship between the object's temperature and the measured values at different distances from the object. This determined relationship can then be stored and used by the processing module 114 in subsequent temperature readings to generate an accurate temperature reading for the object.

In one embodiment, when determining the temperature of the object, the processing module 114 typically "scales down" the image from the sensor having the highest resolution (i.e., either the image sensor 104 or the thermal image sensor 106) so that the resolution matches the resolution of the sensor having the lowest resolution (i.e., the image sensor 104 or the thermal image sensor 106, as the case may be) to have a one-to-one correspondence between the "pixels" in the thermal image sensor 106 and the pixels in the image sensor 104. While such a scaling down operation may provide somewhat fewer measuring points on the distant object, it still provides an enhanced accuracy for the temperature reading compared to conventional thermal cameras.

In some embodiments, the processing module 114 can continuously process images captured by the image sensor 104 and the thermal image sensor 106, respectively, so as to produce a time-lapse series of temperature readings on the object. The temperatures can then be shown to a user in similar ways to what is done on conventional thermal cameras, for example, as a color-coded picture in which each color represents a temperature or a specific temperature range. Various types of image processing techniques can also be subsequently applied in order to identify objects in the image based on the temperature, etc., as is well known to those of ordinary skill in the art.

## Light emitter

The light emitter 112 works in conjunction with the image sensor 104 to determine a distance to the object whose temperature is being measured. In FIG. 1, the light emitter 112 is shown as being attached to the camera housing 102, but it should be realized that the light emitter 112 may be a separate unit that is not attached to the camera housing 112. In some embodiments, the light emitter 112 is an LED (Light Emitting Diode) or a laser. In some embodiments, the light emitted by the light emitter 112 is modulated with a frequency that is typically in the range of approximately 20-40 MHz and the emitted wavelength is typically in the NIR range of approximately 855-947 nm, although it should be clear that this is not an exclusive range and that other wavelength ranges may also be possible depending on the specific implementation details.

In addition, it is possible to use various kinds of modulation techniques. One purpose of modulating the light and/or using different wavelengths is to be able to distinguish a first camera from a second camera (or some type of monitoring device) in the case where two or more cameras are positioned in such a way that they may disturb each other, or to distinguish the light from the light emitter 112 from other ambient light sources. Such disturbance may occur when a light emitter 112 for a first camera 100 illuminates an area in which the reflected light is also detected by the image sensor of a second camera.

As an alternative, or in addition to using frequency-modulated light, it is also possible to use light emitters 112 that emit different wavelengths for different cameras. This also makes it possible to distinguish a first camera from a second camera in the case where two cameras are positioned in such a way that they may disturb each other. As will be described below in conjunction with the lens system, using light with a specific wavelength or within a specific range of wavelengths also makes it possible to use bandpass filters to only pass light of the emitted wavelength to the image sensor 104, which reduces ambient noise and improves the accuracy of the distance measurements.

In some embodiments, the light emitter 112 is also equipped with a diffuser (not shown) through which coherent light can be emitted to provide a speckle pattern on the distant object whose temperature is being measured. The diffuser may be a diffractive optical element or an astigmatic optical element, for example. By measuring the variations in the speckle pattern projected onto the distant object, it is possible to determine the distance to different points of the object. In addition, as was mentioned above, using coherent light may allow the camera to be less sensitive to ambient light by for example using narrow filters that are matched to the coherent light. PCT publication No. WO 2007/105205 by Shpunt et al, describes one example for how the distance to points in a monitored area, as well as shifts in the distance to the points in a monitored area over time, may be determined by measuring shifts in the speckles in the images captured by an image sensor relative to a reference image taken at a known distance.

### Lens systems, beam splitter and mirror system

In the embodiment illustrated in FIG. 1, the light emitted by or reflected from the distant object enters the camera housing 102 through an aperture 118 and reaches the beam splitter 108. The beam splitter 108 divides the incoming light into two separate paths; one path to the image sensor 104 and one path to the thermal image sensor 106, which operate as described above. In the embodiment shown in FIG. 1, the beam splitter 108 is a mirror that reflects visible as well as NIR light, but lets infrared (IR) radiation pass through the mirror. Each optical path contains a lens system 110a, 110b, which includes one or more individual optical components made of materials that are suitable to the type of radiation in their respective optical paths, i.e., infrared and NIR or visible light, respectively. The lens systems 110a, 110b serve to focus the light onto the image sensor 104 and the thermal image sensor 106, respectively. Depending on the physical configuration of the camera, the incoming light may also pass through one or more mirror systems 116 on its way to the respective sensors. It should be realized that even though only one mirror system 116 is illustrated in FIG. 1, there may be one or more mirror systems 116 in each optical path of the camera 100, depending at least in part on the physical configuration of the camera 100. As was also described above, there may be one or more optical band pass filters (not shown) in the optical path to the image sensor 104, which only pass light having the same wavelength as the light emitted by the light emitter 112. This aids in suppressing background light and results in a more accurate distance measurement. It should be noted that it is desirable to have the same focal length of both the visible light subsystem and the thermal radiation subsystem, such that both the image sensor 104 and the thermal image sensor 106 can simultaneously focus on the same object.

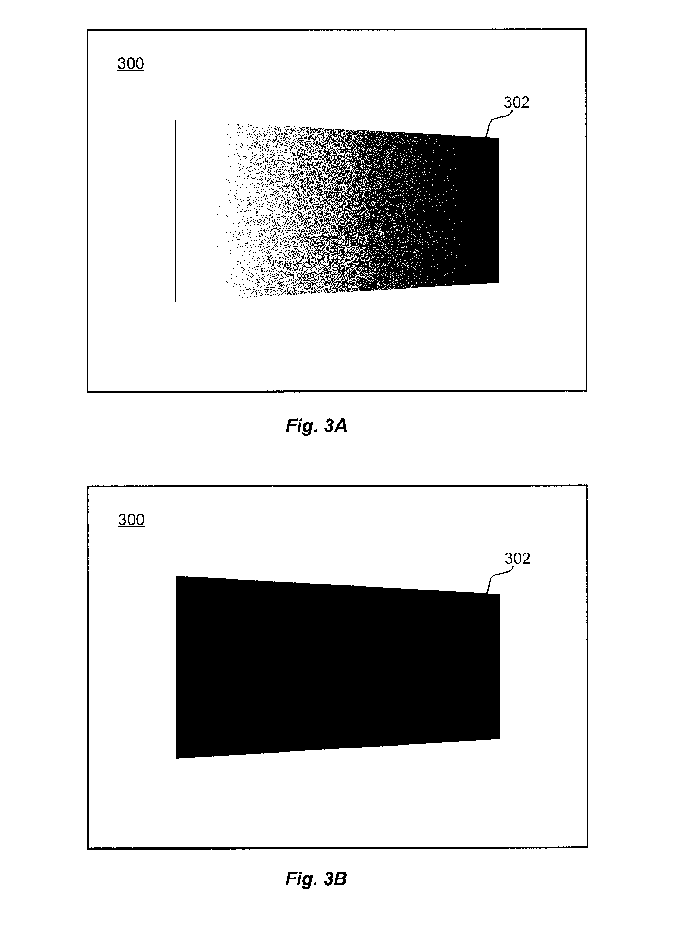

FIG. 2 is a schematic diagram showing a scene 200 captured by a camera 100 in accordance with one embodiment. The scene 200 includes two separate objects 202, 204 which can have different temperatures and sizes, and which are located at different distances from the camera 100. By measuring the distances 202a, 204a-b to the objects in each pixel of the image sensor 104, the camera 100 can simultaneously determine the temperatures of the objects 202, 204. Furthermore, as shown in FIG. 2, as the world is not flat, different portions of a single object 204 may be located at different distances 204a, 204b from the camera 100. By being able to accurately measure the individual distances to the different portions of the object, a more accurate temperature measurement of the object 204 can be obtained compared to what is possible in conventional thermal cameras. For example, a conventional thermal camera might indicate that the temperature across the object 204 varies, while the object may actually have a uniform temperature, and the apparent variation is due to the differences in distances 204a, 204b from the camera. Such errors can be reduced or avoided through the more accurate distance measurements that are possible with the cameras 100 in accordance with the various embodiments described herein. FIGs. 3A and 3B schematically illustrate the differences between a conventional thermal camera and a camera in accordance with the invention. FIG. 3A shows a thermal image 300 of a wall 302 captured with a conventional thermal camera. The wall 302 extends away from the camera, and thus its temperature is indicated in the image as getting increasingly colder as the wall 302 extends further away from the camera. In FIG. 3A, this is illustrated by means of a varying grayscale pattern across the extent of the wall 302 for illustration purposes, but in most thermal cameras, it would be indicated through varying colors. However, in FIG. 3B, the temperature of the same wall 302 is shown as being uniform across the entire wall due to the more precise distance measurements that are enabled in accordance with the various embodiments described herein.

Performing a temperature measurement

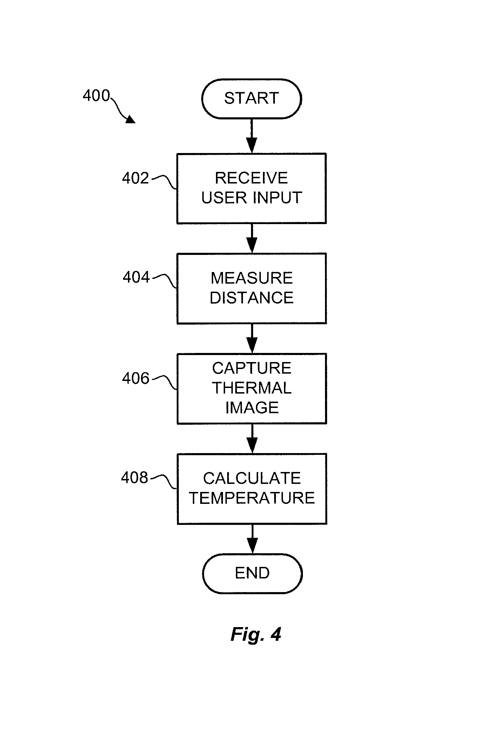

FIG. 4 shows a process 400 for measuring the temperature of a distant object in accordance with one embodiment. As can be seen in FIG. 4, the process starts by receiving 402 a user input specifying the material of the distant object. It should be noted that this step is optional, as discussed above, and can be performed at any point throughout the process 400.

Next, the distances to the various distance measurement points on the object are determined 404. In one embodiment, this is done by illuminating the object by the light emitter 112 with modulated light. The light is reflected after reaching the object. Depending on the surface of the object and/or if there is an obstacle present, the light is reflected in various directions. The image sensor 104 detects the reflected light, as described above. A majority of the light might not be reflected back into the image sensor 104. However, the part of the light that is detected should be sufficient to make an analysis on. By sufficient it is meant that the image sensor 104 should be capable of detecting the modulation format and capable of retrieving information from the reflected light. Each pixel of the image sensor 104 may detect reflected light independently of each other.

In an embodiment where a time of flight type of image sensor 104 is used, a travel time for each pixel of the image sensor 104 is then measured. The measurement is based on the reflected light being compared with the light emitted from the light emitter 112. In some embodiments, the modulation format can be used to determine how long it takes for the light to travel from the light emitter 112 and back to the image sensor 104. For example, by modulating the light emitted from the light emitter 112 with a known pattern and thereafter measure the time it takes for the known pattern to be detected by the image sensor 104. The measured travel times are used to calculate travel distances to the object for each pixel of the image sensor 104. By measuring travel times for the reflected light at discrete positions it is possible to determine where a specific portion of the object is positioned in space. This information is then used to determine the temperature of the object. It should be noted, though, that TOF image sensors are merely one type of image sensors 104 that can be used to measure distances to objects, and that other sensors for distance measurements can also be advantageously used.

Next, an infrared image of the object is captured 406 with the thermal image sensor 106. It should be noted that in applications where moving objects are involved (i.e., where the distance to the camera 100 continuously varies), the infrared image and the distance image are captured substantially simultaneously (i.e., steps 304 and 306 are performed substantially simultaneously) in order to be able to obtain accurate temperature measurements. However, in applications where the objects are stationary, steps 404 and 406 can equally well be performed sequentially.

Finally, the signals from the two sensors are used by the processing module 114 to calculate 408 temperatures in a number of temperature measurement points on the object, as described above, which concludes the process 400. Various types of optional post-processing of the determined temperatures can then be performed, such as generating images, various alerts, identifying foreign objects in a scene, etc.

General considerations

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The term "light" as used in this specification, refers to any kind of electromagnetic radiation, including infrared and ultraviolet, as well as visible light. It should also be noted that while reference has been made above to a single object only, the above methods and apparatus work equally well for scenes that include several objects, such as the scene 200 illustrated in FIG. 2. Various types of post-processing of the images can also be done. For example, several images taken of different views of the object can be combined into a three-dimensional model that shows the temperature distribution across the object. It should also be noted that there may be implementations which rely on other physical phenomena for distance measurements, such as ultrasound, and that such techniques for distance measurements can also be advantageously employed in improving the accuracy of temperature measurements, as described herein.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the claims. The above embodiments were chosen and described in order to best explain the principles of the invention and the practical application, and to enable others of ordinary skill in the art to understand the invention for various embodiments with various modifications as are suited to the particular use contemplated.

**Claims**

1. A method in a device (100), for determining a temperature of a distant obj ect in a plurality of temperature measurement points, the device comprising a thermal image sensor (106) operable to measure thermal radiation from a distant object in a plurality of thermal measurement points on the object, and a distance determination device, the distance determination device including an image sensor (104) operable to calculate a distance to the distant object in a plurality of distance measurement points on the distant object, the method comprising:

   capturing a thermal image by the thermal image sensor, the thermal image indicating an amount of thermal radiation from each of the plurality of thermal measurement points on the distant object (406);
   capturing reflected light from the distant object by the image sensor;
   calculating a plurality of distances using the captured reflected light by the image sensor, each distance indicating a distance from the image sensor to a distinct distance measurement point on the distant object (404);
   combining data from the thermal image and the calculated plurality of distances to determine a temperature in a plurality of temperature measurement points on the distant object(408).

2. The method of claim 1, wherein the thermal image and the reflected light are captured substantially simultaneously.

3. The method of claim 1 or 2, wherein the distant object is a moving object and the capturing, calculating and combining steps are continuously repeated to record temperature variations in each of the plurality of temperature measurement points on the distant object over time.

4. The method of any of claims 1-3, further comprising:

   receiving a user input (402) specifying a surface material for the distant object; and

   wherein processing the thermal image and the plurality of distances includes taking into account an emissivity for the surface material in determining the corrected temperature.

5. The method of any of claims 1-4, further comprising:

   performing image analysis on the image captured by the image sensor to determine the type of distant object;
   based on the determined type of distant object, automatically selecting an appropriate surface material for the distant object; and

   wherein processing the thermal image and the plurality of distances includes taking into account an emissivity for the surface material in determining the corrected temperature.

6. The method of any of claims 1-5, further comprising:

   illuminating the distant object with modulated light; and
   measuring a travel time for the light reflected from the distant object at discrete positions in the image sensor.

7. The method of any of claims 1-5, further comprising:

   illuminating the distant object with coherent light through a diffuser arranged to project a speckle pattern onto the distant object; and
   measuring variations in the speckle pattern on the distant object to calculate the distances to the plurality of distance measurement points on the distant object.

8. A device (100) for determining a temperature of a distant object in a plurality of temperature measurement points, the device comprising:

   a thermal image sensor (106) operable to measure thermal radiation from a distant object in a plurality of thermal measurement points on the object, and to capture a thermal image indicating an amount of thermal radiation from each of the plurality of thermal measurement points on the distant object;

a distance determination device, the distance determination device including an image sensor (104) operable to calculate a distance to the distant object in a plurality of distance measurement points on the distant object and to capture reflected light from the distant object by the image sensor; and
a processing module (114) operable to:

> calculate a plurality of distances using the captured reflected light by the image sensor, each distance indicating a distance from the image sensor to a distinct distance measurement point on the distant object, and
> combine data from the thermal image and the calculated plurality of distances to determine a temperature in a plurality of temperature measurement points on the distant object.

9. The device of claim 8, wherein the distant object is a moving object and wherein the thermal image sensor, the image sensor and the processing module are operable to continuously capture thermal images, calculate distances and combine data to record temperature variations in each of the plurality of temperature measurement points on the distant object over time.

10. The device of claim 8 or 9, wherein the thermal image sensor and the image sensor are provided in a common housing (102), the common housing further including a common optical system (110) through which electromagnetic radiation is operable to pass on its way from the distant object to the thermal image sensor and the image sensor, respectively.

11. The device of any of claims 8-10, wherein the processing module is further operable to:

> receive a user input specifying a surface material for the distant object; and
> take into account an emissivity for the surface material when processing the thermal image and the plurality of distances to determine the corrected temperature.

12. The device of any of claims 8-11, wherein the processing module is further operable to:

> perform image analysis on the image captured by the image sensor to determine the type of distant object;
> based on the determined type of distant object, automatically select an appropriate surface material for the distant object; and
> take into account an emissivity for the surface material when processing the thermal image and the plurality of distances to determine the corrected temperature.

13. The device of any of claims 8-12, wherein the distance determination device is operable to:

> illuminate the distant object with modulated light; and
> measure a travel time for the light reflected from the distant object at discrete positions in the image sensor.

14. The device of any of claims 8-12, wherein the distance determination device is operable to:

> illuminate the distant object with coherent light through a diffuser arranged to project a speckle pattern onto the distant object; and
> measure variations in the speckle pattern on the distant object to calculate the distances to the plurality of distance measurement points on the distant object.

15. A computer program product comprising computer readable program code that, when executed in a processor, performs the method of any of claims 1-7.

**Amended claims in accordance with Rule 137(2) EPC.**

> **1.** A method in a device (100), for determining a temperature of a distant object in a plurality of temperature measurement points, the device comprising a thermal image sensor (106) operable to measure thermal radiation from a distant object in a plurality of thermal measurement points on the object, and a distance determination device, the distance determination device including an image sensor (104) operable to calculate a distance to the distant object in a plurality of distance measurement points on the distant object, the method comprising:

> > capturing a thermal image by the thermal image sensor, the thermal image indicating an amount of thermal radiation from each of the plurality of thermal measurement points on the distant object (406);
> > capturing reflected light from the distant object by the image sensor;
> > calculating a plurality of distances using the captured reflected light by the image sensor, each distance indicating a distance from the image sensor to a distinct distance measurement point on the distant object (404);
> > combining data from the thermal image and the calculated plurality of distances to determine a temperature in a plurality of temperature measurement points on the distant object (408).

**2.** The method of claim 1, wherein the thermal image and the reflected light are captured substantially simultaneously.

**3.** The method of claim 1 or 2, wherein the distant object is a moving object and the capturing, calculating and combining steps are continuously repeated to record temperature variations in each of the plurality of temperature measurement points on the distant object over time.

**4.** The method of any of claims 1-3, further comprising:

receiving a user input (402) specifying a surface material for the distant object; and
wherein processing the thermal image and the plurality of distances includes taking into account an emissivity for the surface material in determining the corrected temperature.

**5.** The method of any of claims 1-4, further comprising:

performing image analysis on the image captured by the image sensor to determine the type of distant object;
based on the determined type of distant object, automatically selecting an appropriate surface material for the distant object; and
wherein processing the thermal image and the plurality of distances includes taking into account an emissivity for the surface material in determining the corrected temperature.

**6.** The method of any of claims 1-5, further comprising:

illuminating the distant object with modulated light; and
measuring a travel time for the light reflected from the distant object at discrete positions in the image sensor.

**7.** The method of any of claims 1-5, further comprising:

illuminating the distant object with coherent light through a diffuser arranged to project a speckle pattern onto the distant object; and
measuring variations in the speckle pattern on the distant object to calculate the distances to the plurality of distance measurement points on the distant object.

**8.** A device (100) for determining a temperature of a distant object in a plurality of temperature measurement points, the device comprising:

a thermal image sensor (106) operable to measure thermal radiation from a distant object in a plurality of thermal measurement points on the object, and to capture a thermal image indicating an amount of thermal radiation from each of the plurality of thermal measurement points on the distant object; **characterized by**:
a distance determination device, the distance determination device including an image sensor (104) operable to calculate a distance to the distant object in a plurality of distance measurement points on the distant object and to capture reflected light from the distant object by the image sensor; and
a processing module (114) operable to:

calculate a plurality of distances using the captured reflected light by the image sensor, each distance indicating a distance from the image sensor to a distinct distance measurement point on the distant object, and
combine data from the thermal image and the calculated plurality of distances to determine a temperature in a plurality of temperature measurement points on the distant object.

**9.** The device of claim 8, wherein the distant object is a moving object and wherein the thermal image sensor, the image sensor and the processing module are operable to continuously capture thermal images, calculate distances and combine data to record temperature variations in each of the plurality of temperature measurement points on the distant object over time.

**10.** The device of claim 8 or 9, wherein the thermal image sensor and the image sensor are provided in a common housing (102), the common housing further including a common optical system (110) through which electromagnetic radiation is operable to pass on its way from the distant object to the thermal image sensor and the image sensor, respectively.

**11.** The device of any of claims 8-10, wherein the processing module is further operable to:

receive a user input specifying a surface material for the distant object; and
take into account an emissivity for the surface material when processing the thermal image and the plurality of distances to determine the corrected temperature.

**12.** The device of any of claims 8-11, wherein the processing module is further operable to:

    perform image analysis on the image captured by the image sensor to determine the type of distant object;
    based on the determined type of distant object, automatically select an appropriate surface material for the distant object; and
    take into account an emissivity for the surface material when processing the thermal image and the plurality of distances to determine the corrected temperature.

**13.** The device of any of claims 8-12, wherein the distance determination device is operable to:

    illuminate the distant object with modulated light; and
    measure a travel time for the light reflected from the distant object at discrete positions in the image sensor.

**14.** The device of any of claims 8-12, wherein the distance determination device is operable to:

    illuminate the distant object with coherent light through a diffuser arranged to project a speckle pattern onto the distant object; and
    measure variations in the speckle pattern on the distant object to calculate the distances to the plurality of distance measurement points on the distant object.

**15.** A computer program product comprising computer readable program code that, when executed in a processor, performs the method of any of claims 1-7.

*Fig. 1*

*Fig. 2*

300

302

*Fig. 3A*

300

302

*Fig. 3B*

400

START

402 — RECEIVE
USER INPUT

404 — MEASURE
DISTANCE

406 — CAPTURE
THERMAL
IMAGE

408 — CALCULATE
TEMPERATURE

END

*Fig. 4*

Europäisches
Patentamt

European
Patent Office

Office européen
des brevets

# EUROPEAN SEARCH REPORT

Application Number

EP 11 16 8077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/124359 A1 (HAMRELIUS U TORBJORN [SE] ET AL) 3 July 2004 (2004-07-03) | 1-3, 6-10, 13-15 | INV.<br>G01J5/02<br>G01J5/08 |
| Y | * abstract; figures 4, 6 *<br>* paragraphs [0011] - [0014], [0017], [0029] - [0035], [0043], [0044], [0047], [0049] * | 4,5,11, 12 | G01J5/00<br>G01J5/10<br>G01J5/20 |
|  | ----- |  |  |
| Y | US 2010/224772 A1 (LEMIEUX DENNIS H [US] ET AL) 9 September 2010 (2010-09-09)<br>* abstract; figure 4 *<br>* paragraphs [0018], [0024] - [0026] * | 4,5,11, 12 |  |
|  | ----- |  |  |
| X | US 2009/182526 A1 (QUINN DAVID E [US] ET AL) 16 July 2009 (2009-07-16)<br>* abstract; figures 1B, 2 *<br>* paragraphs [0009], [0010], [0029], [0066] - [0070], [0074], [0082] * | 1,8,15 |  |
|  | ----- |  |  |

TECHNICAL FIELDS
SEARCHED      (IPC)

G01J

The present search report has been drawn up for all claims

| Place of search | Date of completion of the search | Examiner |
|---|---|---|
| Munich | 26 October 2011 | Varelas, Dimitrios |

EPO FORM 1503 03.82 (P04C01)

**ANNEX TO THE EUROPEAN SEARCH REPORT
ON EUROPEAN PATENT APPLICATION NO.**

EP 11 16 8077

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2011

| Patent document cited in search report | | Publication date | Patent family member(s) | | Publication date |
|---|---|---|---|---|---|
| US 2004124359 | A1 | 01-07-2004 | CN<br>EP<br>JP<br>WO | 1507742 A<br>1386481 A1<br>2004525583 A<br>02091735 A1 | 23-06-2004<br>04-02-2004<br>19-08-2004<br>14-11-2002 |
| US 2010224772 | A1 | 09-09-2010 | NONE | | |
| US 2009182526 | A1 | 16-07-2009 | AU<br>CA<br>CN<br>EP<br>WO | 2009205629 A1<br>2712032 A1<br>101917900 A<br>2247232 A1<br>2009091657 A1 | 23-07-2009<br>23-07-2009<br>15-12-2010<br>10-11-2010<br>23-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007105205 PCT, Shpunt